# EUROPEAN PATENT APPLICATION

(11) **EP 4 391 169 A1**
(43) Date of publication of application: **26.06.2024**
(21) Application number: 22857863.9
(22) Date of filing: 17.08.2022
(51) Int. Cl.: H01M 50/202, H01M 50/233

(54) **LOWER HOUSING, BATTERY PACK, AND VEHICLE**

(30) Priority: 19.08.2021 CN 202121959964 U
(71) Applicant: Beijing CHJ Information Technology Co., Ltd., Beijing 101399 (CN)
(72) Inventor: WANG, Bowen, Beijing 101399 (CN)
(74) Representative: advotec.
(86) International application number: PCT/CN2022/113107
(87) International publication number: WO 2023/020552

(57) **Abstract**

A lower housing, includes: a plurality of edge beams (11) connected to each other, wherein each of the plurality of edge beam (11) comprises a notch (111) formed at a corner of the edge beam (11), and two adjacent notches (111) of two adjacent edge beams (11) of the plurality of edge beams (11) define an accommodating groove (2); and a sealing material (3) filled in accommodating groove (2).

## Description

### CROSS-REFERENCE TO RELATED APPLICATION

This application claims priority to and benefits of Chinese Patent Application No. 202121959964.0, filed on August 19, 2021, the entire content of which is incorporated herein by reference.

### FIELD

The present disclosure relates to a field of vehicle manufacturing, and more particularly to a lower housing, a battery pack and a vehicle.

### BACKGROUND

A power battery pack serves as an important part of an electric vehicle, and the quality of a battery determines the driving range of the electric vehicle, and also affects the quality of the whole vehicle. The battery pack generally includes a lower housing, and in the assembling process of the battery pack, if the airtightness of the lower housing can hardly be ensured, there will be a risk of seal failure of the entire battery pack, thus resulting in reduction of the service life of the battery pack, and affecting the driving range of the electric vehicle.

### SUMMARY

The present disclosure provides a lower housing, a battery pack including the lower housing, and a vehicle equipped with the battery pack.

Embodiments of an aspect of the present disclosure provide a lower housing, and the lower housing includes a plurality of edge beams connected to each other, and the edge beam includes a notch formed at a corner of the edge beam, so that two adjacent notches define an accommodating groove to be filled with a sealing material after two adjacent edge beams are butt-jointed.

In some embodiments, the sealing material in the accommodating groove is arranged to be flush with a horizontal side of the edge beam.

In some embodiments, the notch is configured as a beveled structure inclined from a horizontal side of the edge beam towards a vertical side of the edge beam.

In some embodiments, an inclined angle α of a beveled surface of the notch is 30°~60°, a ratio of a projected length of the notch in a vertical direction to a height of the edge beam is 1:6-1:13, and a projected length of the notch in a horizontal direction is equal to the projected length of the notch in the vertical direction.

In some embodiments, the edge beam includes an upper corner and a lower corner, and the notch is arranged at each of the upper corner and the lower corner.

In some embodiments, one of the two adjacent edge beams is configured as a cavity structure with a side wall, the other one of the two adjacent edge beams is configured as a cavity structure with a bottom wall, the side wall has a first mounting hole, the bottom wall has a second mounting hole corresponding to the first mounting hole, and the two adjacent edge beams are connected by a fastener passing through the first mounting hole and the second mounting hole.

In some embodiments, the sealing material is filled between contact surfaces of the two adjacent edge beams to form a sealing layer, the sealing layer completely covers the contact surfaces, and a thickness of the sealing layer is configured so that the two adjacent edge beams are configured to be in interference fit with the sealing layer, respectively.

Embodiments of another aspect of the present disclosure provide a battery pack, including a cell, and an upper housing, a lower housing and a bottom guard plate connected sequentially from top to bottom. The cell is accommodated in the lower housing, and the lower housing is the lower housing according to any one of the above embodiments.

In some embodiments, a first sealing strip is arranged between a bottom surface of the upper housing and a top surface of the lower housing, and a second sealing strip is arranged between a bottom surface of the lower housing and a top surface of the bottom guard plate.

In some embodiments, the accommodating groove is formed on each of the top surface and the bottom surface of the lower housing, and the first sealing strip and the second sealing strip are stuck to the sealing materials accommodated in the accommodating grooves, respectively.

In some embodiments, the first sealing strip and the second sealing strip may be made of flexible materials, respectively.

Embodiments of another aspect of the present disclosure provide a vehicle, including a battery pack. The battery pack is the battery pack according to any one of the above embodiments.

In the lower housing provided in the embodiments of the present disclosure, the edge beam includes the notch, and the two adjacent notches can form the accommodating groove, to provide the filling space for the sealing material to filled between the two adjacent edge beams, so as to ensure the filling capacity of the sealing material. In the embodiments of the present disclosure, the height difference between the two adjacent edge beams caused by installation or manufacturing may be compensated by the sealing material filled into the accommodating groove, so as to ensure the sealing effect between the two edge beams and the flatness of the sealing surface of the edge beam, and further ensure that the edge beam can be well fitted with a contact surface of another component.

Other features and advantages of the present disclosure will be explained in detail in the following detailed description.

### BRIEF DESCRIPTION OF THE DRAWINGS

The drawings are intended to provide a further understanding of the present disclosure, form a part of the specification, and are used to explain the present disclosure together with the specific embodiments below, but do not constitute a limitation of the present disclosure, in which:
FIG. 1 is a schematic view of a battery pack provided in an exemplary embodiment of the present disclosure;
FIG 2 is a partial enlarged view of part A of FIG 1;
FIG 3 is a rear view of a battery pack provided in an exemplary embodiment of the present disclosure;
FIG 4 is a partial enlarged view of part B of FIG 3;
FIG 5 is a schematic view of two adjacent beams which are not filled with a sealant therebetween provided in an exemplary embodiment of the present disclosure.

Brief description of reference signs:
edge beam 11; notch 111; side wall 112; bottom wall 113; accommodating groove 2; sealant 3; upper housing 4; bottom guard plate 5; first sealing strip 61; second sealing strip 62.

### DETAILED DESCRIPTION

Embodiments of the present disclosure are described in detail below with reference to the drawings. It should be understood that the specific embodiments described herein are intended to illustrate and explain the present disclosure, but not to limit the present disclosure.

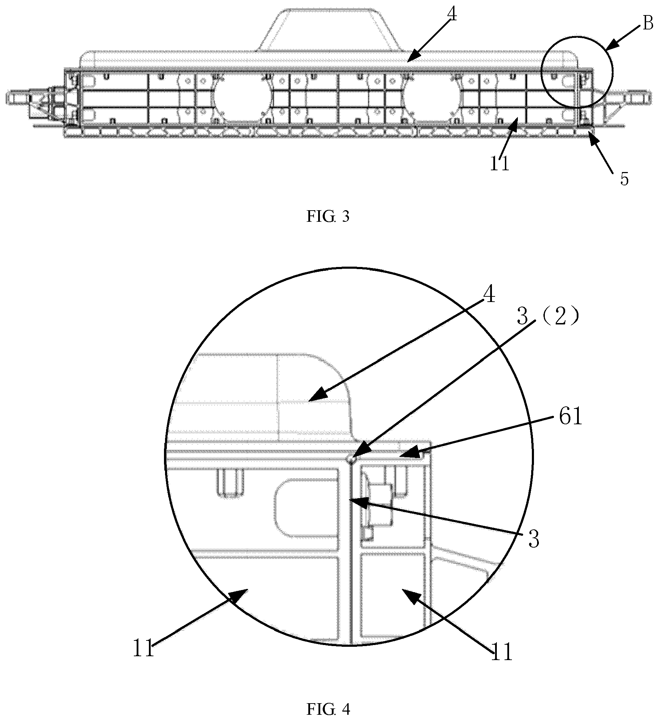

In the present disclosure, unless otherwise stated, terms of orientation such as "up", "down", "top" and "bottom" are defined in a case of a normal installation of a lower housing and a battery pack provided in embodiments of the present disclosure, and specifically may refer to drawing surface directions shown in FIG 3. Terms "inner" and "outer" refer to inner and outer of a contour of a corresponding component. Terms such as "first" and "second" used in the present disclosure are intended to distinguish an element from another and do not indicate sequence or importance. In addition, in the following description, when referring to the drawings, the same reference sign in different drawings indicates the same or similar element.

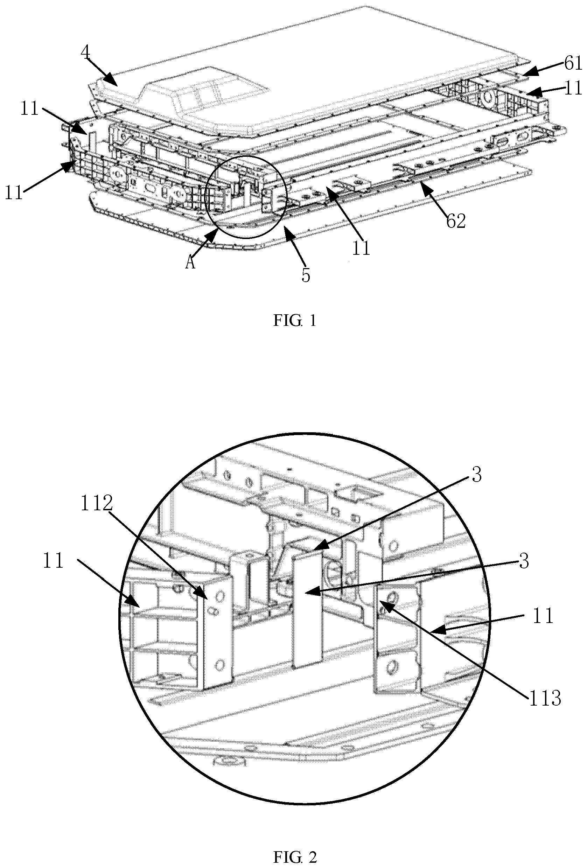

Referring to FIG 1 to FIG 5, embodiments of the present disclosure provide a lower housing, the lower housing may include a plurality of edge beams 11 connected to each other to enclose and form a frame structure, which can ensure sufficient safety and stability of the lower housing. The lower housing may be configured to accommodate a battery module. Or, in the CTP (Cell to Pack) technology, the lower housing may be configured to accommodate cells to be mentioned below, such as blade batteries, etc., which can ensure the reliability of the cell during installation. A notch 111 may be formed at a corner of the edge beam 11, so that two adjacent notches 111 form an accommodating groove 2 after two adjacent edge beams 11 are butt-jointed, so as to form a filling space to be filled with a sealing material 3. Herein, the corner of the edge beam 11 refers to the corners in contact with each other of the two adjacent edge beams 11. For example, when the edge beam 11 is cuboid, the corner refers to the four corners of the edge beam 11. The stability of the filling of the sealing material 3 can be effectively ensured by the accommodating groove 2 formed on a body of the edge beam 11. In some embodiments, the sealing material 3 may be a sealant, and the sealant can be deformed according to a shape of a sealing surface of the accommodating groove 2 and has a certain adhesiveness. Or, it may be another material with a sealing effect. The flatness of a sealing surface of the edge beam 11 can be effectively improved by the filling of the sealing material 3, which avoids the problem of seal failure caused by a too large height deviation between the two adjacent edge beams 11, thus ensuring the stability and safety of the cell accommodated in the lower housing, and preventing the gas or liquid outside from entering the lower housing and affecting the service life of the cell. In addition, when the accommodating groove 2 is filled with the sealing material 3, the sealing material 3 may be smoothed by the staff to further reduce the height difference between the two adjacent edge beams 11, thus ensuring the flatness of the sealing surface.

In the lower housing provided in the embodiments of the present disclosure, the two adjacent notches 111 can form the accommodating groove 2 by providing the notch 111 on the edge beam 11, so as to provide the accommodating space for the sealing material 3 to be filled between the two adjacent edge beams 11, thus ensuring the filling capacity of the sealing material 3. In the embodiments of the present disclosure, the height difference between the two adjacent edge beams 11 caused by installation or manufacturing may be compensated by the sealing material 3 filled into the accommodating groove 2, so as to ensure the sealing effect between two edge beams 11 and the flatness of the sealing surface of the edge beam 11, thus further ensuring that the edge beam 11 can be well fitted with a contact surface of another component.

In some embodiments, the sealing material 3 in the accommodating groove 2 may be configured to be flush with a horizontal side of the edge beam 11. For example, the sealing material 3 may be smoothed by the staff after the sealing material 3 is filled in the accommodating groove 2, so that the sealing material 3 may be in plane contact with an upper housing and a bottom guard plate 5 to ensure the airtightness. Herein, one end of the sealing material 3 may also be flush with a higher edge beam, and the other end of the sealing material 3 may be flush with a lower edge beam 11, so that the sealing material 3 is configured as a transition structure therebetween, thus further reducing the problem of seal failure caused by the too large height difference. In practical applications, the smoothing effect of the sealing material 3 may be determined according to a specific position of the height difference of the edge beams 11.

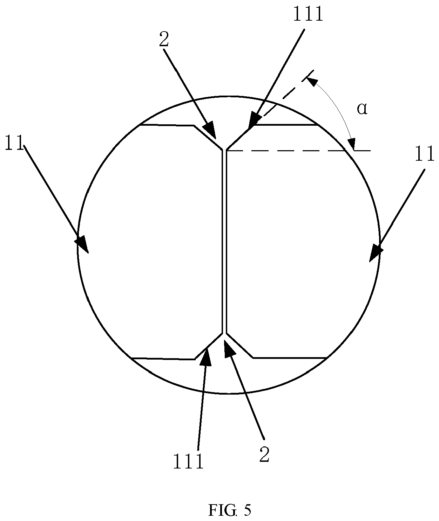

Referring to FIG 1 and FIG 5, the notch 111 is configured as a beveled structure which is inclined from the horizontal side of the edge beam 11 towards a vertical side of the edge beam 11, so as to facilitate the sealing material 3 to be filled at most in the accommodating groove 2. In some embodiments, the accommodating groove 2 may be configured as a V-shaped structure, and a side wall of the V-shaped structure can guide the sealing material, so that the V-shaped structure can be filled with the sealing material 3. Meanwhile, the V-shaped structure is simple and convenient to mold, thus ensuring the overall strength of the edge beam 11 and effectively improving the assembling efficiency of the edge beams 11. In other embodiments, the accommodating groove 2 may also be configured as a structure with an arc-shaped bottom.

Further, referring to FIG 5, in some embodiments, an inclined angle α of a beveled surface of the notch 111 may be 30°~60°, for example α=45°. A ratio of a projected length of the notch 111 in a vertical direction to a height of the edge beam 11 may be 1:6-1:13, and a projected length of the notch 111 in a horizontal direction may be equal to the projected length of the notch 111 in the vertical direction. When the height of the edge beam 11 is 40 cm, the projected length of the notch 111 in the vertical direction may be 3 cm~7 cm, such as 5 cm. Accordingly, the projected length of the notch 111 in the horizontal direction may be 5 cm. This proportionality range may be adapted to the edge beams 11 with different heights, so that the height of the accommodating groove 2 can meet requirements of the height difference in various situations. Specifically, referring to FIG 5, the inclined angle refers to an angle of the notch 111 relative to a horizontal plane (that is, a plane perpendicular to the drawing surface of FIG 5), the projected length of the notch 111 in the horizontal direction refers to a length of an orthographic projection of the notch 111 in an up-down direction of the drawing surface, and the projected length of the notch 111 in the vertical direction refers to a length of an orthographic projection of the notch 111 in a left-right direction of the drawing surface. The notch 111 in this size range is easy to manufacture, will not damage the overall structure of the edge beam 11, and can ensure the stability of the filling of the sealing material 3 and the sufficient filling amount of the sealing material 3, so as to ensure the flatness of the sealing surface of the edge beam 11 and the sealing effect of the edge beam 11.

Referring to FIG 1 and FIG 5, the edge beam 11 includes an upper corner and a lower corner, and the upper corner and the lower corner may both include the notch 111, so as to further increase the filling amount of the sealing material 3, ensure the flatness of upper surfaces and lower surfaces of the two adjacent edge beams 11, and ensure the sealing effect between the edge beams 11. For example, when a top surface of the edge beam 11 is connected with the upper housing and a bottom surface of the edge beam 11 is connected with a bottom plate, the notches 111 are arranged at both the upper corner and the lower corner to ensure that the edge beam 11 is tightly connected with components on upper and lower sides, so as to ensure that the cell can be sealed in the battery pack.

Referring to FIG 1, one of the two adjacent edge beams 11 is configured as a cavity structure with a side wall 112, and the other one of the two adjacent edge beams 11 is configured as a cavity structure with a bottom wall 113. The side wall 112 has a first mounting hole, and the bottom wall 113 has a second mounting hole which is corresponding to the first mounting hole. The two adjacent edge beams 11 are connected by a fastener passing through the first mounting hole and the second mounting hole. The bottom wall 113 may be a wall of the corresponding edge beam 11 on a side adjacent to the cell, and the side wall 112 may be a wall of the corresponding edge beam 11 on a side perpendicular to the cell. On the one hand, the cavity structures can ensure the stability of the installation position of the fastener, so that the fastener can ensure the connection effect between the two adjacent edge beams 11. On the other hand, the cavity structures can effectively isolate the fastener from other components arranged around the lower housing, such as a wire harness, to avoid interference between the fastener and the wire harness. In some embodiments, the fastener for connecting the two adjacent edge beams 11 may be a bolt, and the first mounting hole and the second mounting hole may be formed as threaded holes which are capable of matching with the bolt, so that the two adjacent edge beams 11 can be detachably connected, so as to facilitate the inspection and maintenance of the lower housing by the staff, and also to effectively enhance the connection strength between the two adjacent edge beams 11. When the two edge beams 11 are connected by the bolt, upper edges and lower edges of the two edge beams 11 tend to be misaligned during the installation of the bolt. Accordingly, the edge beam 11 according to the present disclosure can solve this technical problem well. By using the edge beam 11 according to the present disclosure in combination with the connection manner of the bolt, the sealing effect of the battery pack is better and it is more convenient to install the lower housing. In other embodiments, the edge beams 11 may also be connected by means of bonding.

Referring to FIG 2, FIG 4 and FIG 5, the sealing material 3 is filled between contact surfaces of the two adjacent edge beams 11 to form a sealing layer. The sealing material 3 that forms the sealing layer between the contact surfaces of the two adjacent edge beams 11 may also be a sealant, so that the sealing material 3 can not only fill a gap between the two edge beams 11 to ensure the sealing effect between the two edge beams 11, but also increase the connection strength between the two edge beams 11, so as to improve the overall effect between multiple edge beams 11 and ensure the stability of the connection between the edge beams 11, thus preventing the cell accommodated in the lower housing from being damaged, and prolonging the service life of the cell. Herein, the sealing material 3 between the contact surfaces of the two edge beams 11 may be pre-coated on the contact surfaces, which can ensure that when the two edge beams 11 are fixed by the bolt, the sealing material 3 may overflow from their peripheries, thus ensuring the sealing effect. Alternatively, the sealing material 3 between the contact surfaces of the two edge beams 11 may be derived from the sealing material 3 in the accommodating groove 2. Specifically, the sealing material 3 may be first filled into the accommodating groove 2, and then the sealing material 3 flows into the gap between the two edge beams 11 by means of extrusion, so as to seal the gap between the two edge beams 11 more comprehensively. With the sealing layer completely covering the contact surfaces of the two adjacent edge beams 11, the connection effect and the sealing effect between the two edge beams 11 can be further enhanced. A thickness of the sealing layer may be configured so that the two adjacent edge beams 11 can be in interference fit with the sealing layer respectively, so that the sealing layer can partially wrap end faces in contact with each other of the two adjacent edge beams 11, which greatly enhances the sealing effect of the sealing material 3 on the two adjacent edge beams 11, and ensures the reliability of the connection between the two adjacent edge beams 11. In some embodiments, the sealing material 3 here may smoothed by the staff, which can not only improve the flatness of an outer contour surface of the edge beam 11, but also effectively ensure the sealing effect of the sealing material 3 on the edge beams 11, thus avoiding the overfilling of the sealant 3 which otherwise will result in a waste of resources or an overflow of the sealing material 3 from the gap between the two adjacent edge beams 11. In addition, a sealing structure such as a sealing strip may be affixed to the outer surface of the connection of the two adjacent edge beams 11 to further ensure that the sealing material 3 will not overflow along a direction perpendicular to the paper surface in FIG 5.

Embodiments of another aspect of the present disclosure also provide a battery pack, as shown in FIG 1. The battery pack provided in the embodiments of the present disclosure may include a cell or a battery module which is consist of a plurality of cells, and an upper housing 4, a lower housing and a bottom guard plate 5 which are connected sequentially from top to bottom. The lower housing is the lower housing described above, and the cell or the battery module may be accommodated in an enclosed space enclosed by the upper housing 4, the lower housing and the bottom guard plate 5, so as to be fully protected. The battery pack has all the beneficial effects of the lower housing described above, which will not be repeated here.

Further, referring to FIG 1, a first sealing strip 61 may be arranged between a bottom surface of the upper housing 4 and a top surface of the lower housing (that is, the top surface of the edge beam 11) to enhance the sealing effect between the upper housing 4 and the lower housing; and a second sealing strip 62 may be arranged between a bottom surface of the lower housing (that is, the bottom surface of the edge beam 11) and a top surface of the bottom guard plate 5 to enhance the sealing effect between the lower housing and the bottom guard plate 5, so as to ensure the sealing performance of the battery pack and prolong the service life of the battery pack.

Referring to FIG 1, FIG. 4 and FIG. 5, the accommodating groove 2 may be formed on each of the top surface and the bottom surface of the lower housing, so that both the bottom surface and the top surface of the lower housing can be filled with the sealing material 3, so as to further improve the flatness of the top surface and the bottom surface of the edge beam 11 and enhance the sealing effect between the edge beams 11. Meanwhile, the first sealing strip 61 and the second sealing strip 62 may be stuck to the sealing materials 3 in the corresponding accommodating grooves 2, respectively, and after the sealing material is filled into the accommodating groove 2 and is smoothed, the sealing strip may be bonded to the smoothed sealing material. On the one hand, it can further ensure the connection effect between the two adjacent edge beams 11, and further improve the airtightness of the connection of the two adjacent edge beams 11.

In some embodiments, the first sealing strip 61 and the second sealing strip 62 may be made of flexible materials respectively, such as rubber materials, etc. In this way, the first seal strip 61 can improve the sealing effect between the upper housing 4 and the lower housing, and also the second sealing strip 62 can improve the sealing effect between the lower housing and the bottom guard plate 5, so as to ensure the airtightness of the battery pack. Furthermore, the first sealing strip 61 and the second sealing strip 62 can play a certain buffer role when the battery pack is squeezed by an external force. Meanwhile, the first sealing strip 61 may also reduce the wear between the upper housing 4 and the lower housing, and the second sealing strip 62 may also reduce the wear between the lower housing and the bottom guard plate 5, so as to improve the safety between the lower housing, the upper housing 4 and the bottom guard plate 5, thus improving the service life of the battery pack.

Embodiments of another aspect of the present disclosure provide a vehicle. The vehicle may include a battery pack, and the battery pack is the battery pack described above. The vehicle has all the beneficial effects of the battery pack provided in the present disclosure, which will not be repeated here.

The preferred embodiments of the present disclosure are described in detail above with reference to the drawings, but the present disclosure is not limited to the specific details in the embodiments described above. Within the scope of the technical conception of the present disclosure, a variety of simple variants of the technical solution of the present disclosure may be made, and these simple variants fall within the scope of protection of the present disclosure.

In addition, it should be noted that the specific technical features described in the above specific embodiments may be combined in any appropriate way without contradiction, and in order to avoid unnecessary repetition, the various possible combinations are not separately stated in the present disclosure.

In addition, various embodiments of the present disclosure may be arbitrarily combined, and as long as they do not contradict the idea of the present disclosure, they shall also be regarded as the content disclosed in the present disclosure.

## Claims

1. A lower housing, comprising a plurality of edge beams (11) connected to each other, wherein the edge beam (11) comprises a notch (111) formed at a corner of the edge beam (11), so that two adjacent notches (111) define an accommodating groove (2)to be filled with a sealing material (3) after two adjacent edge beams (11) are butt-jointed.

2. The lower housing according to claim 1, wherein the sealing material (3) in the accommodating groove (2) is arranged to be flush with a horizontal side of the edge beam (11).

3. The lower housing according to claim 1 or 2, wherein the notch (111) is configured as a beveled structure inclined from a horizontal side of the edge beam (11) towards a vertical side of the edge beam (11).

4. The lower housing according to any one of claims 1-3, wherein an inclined angle α of a beveled surface of the notch (111) is 30°~60°, a ratio of a projected length of the notch (111) in a vertical direction to a height of the edge beam (11) is 1:6-1:13, and a projected length of the notch (111) in a horizontal direction is equal to the projected length of the notch (111) in the vertical direction.

5. The lower housing according to any one of claims 1-4, wherein the edge beam (11) comprises an upper corner and a lower corner, and the notch (111) is arranged at each of the upper corner and the lower corner.

6. The lower housing according to any one of claims 1-5, wherein one of the two adjacent edge beams (11) is configured as a cavity structure with a side wall (112), the other one of the two adjacent edge beams (11) is configured as a cavity structure with a bottom wall (113), the side wall (112) has a first mounting hole, the bottom wall (113) has a second mounting hole corresponding to the first mounting hole, and the two adjacent edge beams (11) are connected by a fastener passing through the first mounting hole and the second mounting hole.

7. The lower housing according to any one of claims 1-6, wherein the sealing material (3) is filled between contact surfaces of the two adjacent edge beams (11) to form a sealing layer, the sealing layer completely covers the contact surfaces, and a thickness of the sealing layer is configured so that the two adjacent edge beams (11) are configured to be in interference fit with the sealing layer, respectively.

8. A battery pack, comprising a cell, and an upper housing (4), a lower housing and a bottom guard plate (5) connected sequentially from top to bottom, the cell being accommodated in the lower housing, and the lower housing being a lower housing according to any one of claims 1-7.

9. The battery pack according to claim 8, wherein a first sealing strip (61) is arranged between a bottom surface of the upper housing (4) and a top surface of the lower housing, and a second sealing strip (62) is arranged between a bottom surface of the lower housing and a top surface of the bottom guard plate (5).

10. The battery pack according to claim 8 or 9, wherein the accommodating groove (2) is formed on each of the top surface and the bottom surface of the lower housing, and the first sealing strip (61) and the second sealing strip (62) are stuck to the sealing materials (3) accommodated in the accommodating grooves (2), respectively.

11. The battery pack according to claim 9 or 10, wherein the first sealing strip (61) and the second sealing strip (62) are made of flexible materials, respectively.

12. A vehicle, comprising a battery pack according to any one of claims 8-11.
